Europäisches Patentamt

European Patent Office

Office européen des brevets

(19)

(11) Numéro de publication: **0 253 731 B1**

# (12) FASCICULE DE BREVET EUROPEEN

(45) Date de publication de fascicule du brevet:
**03.07.91**

(51) Int. Cl.5: **G01N 21/64**, //G01N21/68,
G01J3/447,G21F7/00

(21) Numéro de dépôt: **87401660.3**

(22) Date de dépôt: **15.07.87**

Le dossier contient des informations techniques présentées postérieurement au dépôt de la demande et ne figurant pas dans le présent fascicule.

(54) **Dispositif de dosage élémentaire par fluorescence induite par laser dans un plasma haute fréquence.**

(30) Priorité: **17.07.86 FR 8610411**

(43) Date de publication de la demande:
**20.01.88 Bulletin 88/03**

(45) Mention de la délivrance du brevet:
**03.07.91 Bulletin 91/27**

(84) Etats contractants désignés:
**DE GB**

(56) Documents cités:
**EP-A- 0 081 785**

**1981 INMM PROCEEDINGS - NUCLEAR MATE-RIALS MANAGEMENT, 1981, pages 481-488; M.C. EDELSON et al.: "Application of inducti-vely coupled plasma-atomic emission and fluorescence spectroscopy to the safeguarding of a nuclear facility"**

(73) Titulaire: **COMMISSARIAT A L'ENERGIE ATO-MIQUE**
**31-33, rue de la Fédération**
**F-75015 Paris(FR)**

(72) Inventeur: **Berthoud, Thierry**
**27, rue Rambuteau**
**F-75004 Paris(FR)**
Inventeur: **Mauchien, Patrick**
**97, rue de Paris**
**F-91400 Orsay(FR)**
Inventeur: **Vian, Alain**
**4, rue du Vermandois**
**F-50130 Octeville(FR)**
Inventeur: **Le Provost, Pierre**
**9, rue Alphonse Daudet**
**F-50120 Equeurdreville-Hainneville(FR)**

(74) Mandataire: **Mongrédien, André et al**
**c/o BREVATOME 25, rue de Ponthieu**
**F-75008 Paris(FR)**

SPECTROCHIMICA ACTA, vol. 39B, nos. 9-11, 1984, pages 1345-1363, Pergamon Press Ltd, Oxford, GB; H.G.C. HUMAN et al.: "Laser excited analytical atomic and ionic fluorescence in flames, furnaces and inductively coupled plasmas - II. Fluorescence characteristics and detection limits for fourteen elements"

**Description**

La présente invention a pour objet un dispositif de dosage d'un ou plusieurs éléments, par exemple radioactifs ou corrosifs, contenus dans une solution, utilisant la technique de fluorescence induite par laser dans un plasma haute fréquence. Elle s'applique en particulier aux éléments chimiques ayant un très grand nombre de transitions lumineuses possibles que l'on trouve dans les usines de retraitement des combustibles nucléaires irradiés.

Le dosage des éléments tels que le fer, le nickel, le cuivre, l'uranium, le technétium, le neptunium, le curium, l'américium et le plutonium est pratiqué de manière systématique dans le cycle du retraitement des combustibles nucléaires irradiés. En effet, dans la phase de retraitement, le procédé PUREX couramment mis en oeuvre nécessite de nombreux contrôles de ces éléments chimiques pour la bonne marche du procédé, pour s'assurer de la qualité des produits finis, pour contrôler l'inocuité des rejets et effluents des installations de retraitement, et pour réaliser les bilans des matières fissiles.

De nombreuses techniques analytiques sont mises en oeuvre à cet effet. Elles nécessitent parfois des séparations chimiques souvent longues. En outre, dans un certain nombre de cas, ces techniques d'analyses sont pratiquement irréalisables dans le cadre du contrôle de la bonne marche du procédé de retraitement.

Plus récemment, on a utilisé la spectroscopie d'émission dans un plasma haute fréquence ou inductif pour l'analyse de matériaux radioactifs situés dans des boîtes à gants ou enceintes blindées. Cette technique a notamment été décrite dans les brevets du déposant FR-A-84.07330 du 11/05/84 et FR-A-84 07411 du 14/05/84.

On rappelle que la spectroscopie d'émission utilise comme moyen d'excitation les collisions induites par le plasma créé par une onde électromagnétique radiofréquence et non une onde lumineuse à l'inverse de la fluorescence, phénomène utilisé dans l'invention.

Toutefois, l'application de cette technique est limitée par les interférences spectrales dues à l'émission d'éléments autres que celui à analyser, présents en forte concentration dans l'échantillon. Ceci est généralement le cas lorsque l'échantillon contient un élément dont le spectre d'émission est très riche ou complexe et qui est présent en forte quantité. Le dosage des éléments à transuraniens tels que l'américium, le neptunium, le plutonium, le curium ou d'autres éléments comme le technétium, le zirconium, le cuivre, le fer, le nickel, dans une solution contenant une forte concentration d'uranium et/ou d'autres éléments à spectres d'émission denses est un exemple typique de ce problème.

Par exemple, avec cette technique, on ne peut guère doser le plutonium dans un rapport U/Pu supérieur à 100. En outre, cette technique ne permet guère le dosage de cuivre, de fer, de nickel, de technétium etc. entrant dans la composition des combustibles nucléaires irradiés sans réaliser au préalable une séparation de l'uranium et/ou du plutonium de ces éléments.

La fluorescence atomique et ionique induite par un laser pulsé dans un plasma haute fréquence est une technique connue, décrite en particulier dans Spectrochimica Acta Vol. 39B, n° 9-11, pp. 1345-1363, 1984 de H.G.C. HUMANN, N. OMENETTO, P. CAVALLI et G. ROSSI, intitulé "Laser excited analytical atomic and ionic fluorescence in flames, furnaces and inductively coupled plasmas-II. Fluorescence characteristics and detection limits for fourteen elements".

Elle est fondée sur l'utilisation de la brièveté des temps de vie des espèces atomiques et ioniques excitées. L'excitation du plasma à l'aide d'un laser émettant des impulsions lumineuses de très courte durée (de l'ordre de 12 ns) provoque une transition électronique de l'espèce chimique à analyser engendrant alors un signal de fluorescence très bref dans le visible ou l'ultraviolet.

L'utilisation d'une excitation lumineuse pulsée permet de ne prendre en compte que le signal de fluorescence de l'espèce à analyser. En effet, l'émission qui crée les interférences en spectroscopie classique (voir brevet ci-dessus) est continue alors que l'intensité lumineuse de fluorescence est instantanée. En outre, l'intensité de fluorescence est très supérieure à l'intensité de l'émission continue de l'élément à analyser. Cette technique de fluorescence pulsée induite permet donc de s'affranchir de toute interférence spectrale.

Bien entendu, ce principe ne s'applique pas au seul cas où deux éléments auraient une coïncidence exacte de la longueur d'onde d'excitation et de la longueur d'onde de fluorescence, cas dont la probabilité est quasi nulle et qui n'a jamais été observé.

Toutefois, la fluorescence atomique et induite décrite dans ce document ne se rapporte qu'à des échantillons, non radioactifs ne contenant que l'élément à analyser.

L'association de la technique d'émission dans un plasma haute fréquence et de la fluorescence induite par laser dans ce plasma pour des matériaux radioactifs a déjà été suggérée dans un article de M.C. EDELSON et V.A. FASSEL dans un article de I.N.M.M. Proceedings, 1981, Nuclear Materials Management intitulé "Application of inductively coupled plasma-atomic emission and fluorescence spectroscopy to the safeguarding of a nuclear facility, pp. 481-488.

Dans cet article, la fluorescence induite dans l'uranium et le plutonium est envisagée pour de l'analyse isotopique. En vue de cette analyse, on envisage d'effectuer une extraction, hors de l'enceinte de confinement du plasma contenant les ions radioactifs injectés, la formation d'un faisceau collimaté sous vide de ce plasma extrait et une mesure, si possible, sans effet Doppler de la quantité de plutonium et/ou d'uranium.

Cette extraction des ions radioactifs présente un certain nombre d'inconvénients du point de vue de la sûreté. En outre, le dispositif correspondant serait, en cas de réalisation, relativement complexe, notamment à cause de l'effet Doppler engendré par la chaleur (5000-8000°K) élevée du plasma et de la nécessité de faire le vide.

La présente invention a justement pour objet un dispositif industriel de dosage élémentaire en milieu dangereux utilisant la fluorescence induite par laser dans un plasma haute fréquence permettant de remédier aux différents inconvénients ci-dessus.

En particulier, elle permet, de façon très simple, la réalisation de dosages précis d'éléments notamment radioactifs ou corrosifs, présents en faible quantité et ayant un spectre d'émission complexe tout en s'affranchissant des problèmes de séparations chimiques, d'interférences spectrales habituellement rencontrées, et de vide.

De façon plus précise, l'invention a pour objet un dispositif de dosage d'un élément contenu dans un échantillon liquide, tel que défini dans la revendication 1.

Ce dispositif est très sensible. Il permet en particulier le dosage d'éléments à émission complexe tels que le plutonium (30 000 raies d'émission possible), le technétium, le neptunium, l'uranium, le curium, l'américium, le fer, le nickel, le cuivre, etc., présents en faible quantité dans une solution contenant d'autres éléments, à spectre d'émission complexe.

En outre, ces dosages, dans le cycle du retraitement des combustibles nucléaires irradiés peuvent être réalisés sans effectuer au préalable une séparation de l'uranium et du plutonium des autres éléments constituant ces combustibles. Ce dosage peut donc être utilisé à tout moment du cycle de retraitement.

Par ailleurs, le dosage se fait sans extraction de plasma et sous pression atmosphérique.

En vue de traiter de façon automatique plusieurs échantillons, contenant des éléments à mesurer différents, on utilise avantageusement un laser accordable en longueur d'onde, tel qu'un laser à colorant, ainsi que des moyens de balayage en longueurs d'onde du spectromètre.

En vue de réaliser une détection par fluorescence induite dans le domaine de l'ultraviolet, une fenêtre en quartz non traité est notamment prévue sur l'enceinte, en regard du spectromètre.

De façon avantageuse, la largeur spectrale des impulsions laser est inférieure à la largeur de la transition responsable de la fluorescence. Par ailleurs, il est avantageux d'introduire les impulsions laser dans l'enceinte par une fenêtre en quartz non traité montée sur l'enceinte. De même, il est préférable d'utiliser comme composants optiques pour envoyer les impulsions laser dans le plasma, des prismes en quartz non traité.

En vue d'obtenir un signal électrique qui est proportionnel à l'intensité d'une impulsion lumineuse émise par l'échantillon à analyser, on utilise avantageusement un spectromètre comportant un système de détection pulsé associé à un échantillonneur bloqueur qui transforme une série de signaux pulsés électriques émis par le spectromètre en des signaux continus proportionnels à l'intensité moyenne de ladite série.

D'autres caractéristiques et avantages de l'invention ressortiront mieux de la description qui va suivre, donnée à titre illustratif et non limitatif, en référence aux figures annexées dans lesquelles :

- la figure 1 représente schématiquement un dispositif de dosage conforme à l'invention,
- les figures 2 et 3 représentent deux spectres de fluorescence du plutonium donnant l'intensité de fluorescence, $I_f$ en unité arbitraire, en fonction de la longueur d'onde de l'excitation lumineuse ; pour la figure 2, la longueur d'onde d'excitation est de l'ordre de 585 nm avec une largeur de bande de 0,05 nm et pour la figure 3, la longueur d'onde d'excitation est de 300 nm avec une largeur de bande de $4.10^{-3}$ nm.

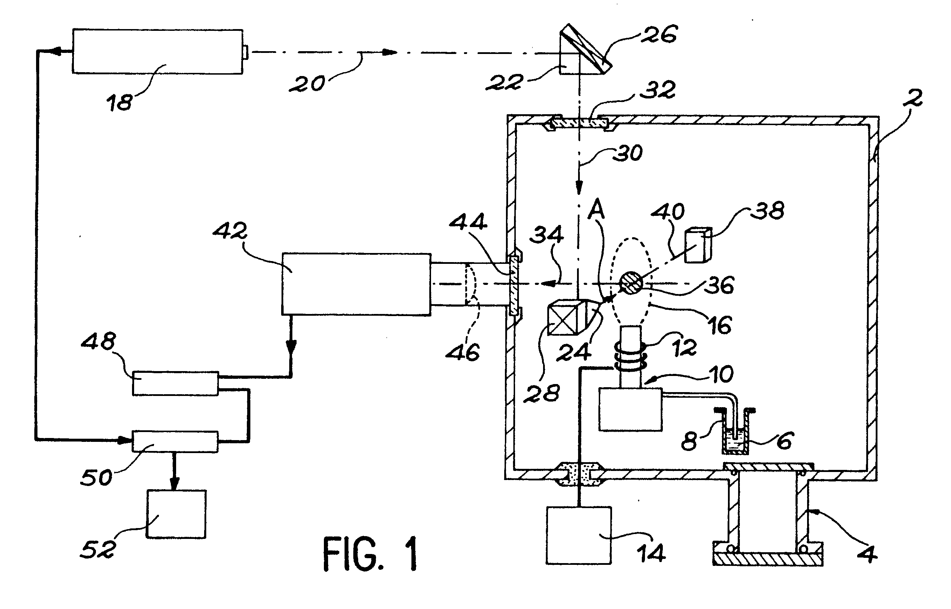

Le dispositif de dosage conforme à l'invention, représenté sur la figure 1, comporte une enceinte de confinement 2, du type boîte à gants ou enceinte blindée, ne comportant qu'un sas d'entrée 4 servant à introduire l'échantillon 6 à analyser, ce sas d'entrée 4 étant fermé lors du dosage.

Le dosage se fait sans rupture de confinement de l'enceinte 2 et à pression atmosphérique.

L'échantillon à analyser 6 est un échantillon liquide radioactif, provenant notamment du retraitement des combustibles nucléaires irradiés, et est logé dans un récipient 8 placé dans l'enceinte. Cet échantillon liquide 6 contient un ou plusieurs éléments à analyser présentant un spectre d'émission complexe comme les transuraniens, éléments dont on veut déterminer la concentration.

Le dispositif de l'invention comprend, situé dans l'enceinte, un système 10 bien connu de l'homme de l'art, permettant le pompage de l'échantillon 6, une alimentation en gaz neutre, et en particulier d'argon, ainsi que l'injection de l'échantillon dans le gaz neutre. Une bobine d'induction 12 reliée à un générateur haute fréquence 14, permet la formation, à partir du gaz neutre contenant l'échantillon, d'un plasma 16 de haute fréquence. L'ensemble 10, 12, 14 constitue une torche à plasma HF du type de celle décrite dans le brevet Sourrouille, ci-dessus.

Le générateur HF, 14 délivre en particulier des ondes électromagnétiques de 27 à 64 MHz et présente une puissance de 1-3 kW.

Le dispositif selon l'invention comprend aussi un laser 18, situé hors de l'enceinte 2, émettant des impulsions lumineuses 20 susceptibles d'interagir avec le plasma HF 16. Ce laser 18 est en particulier un laser à colorant, accordable en longueur d'ondes, et pompé par un laser pulsé de type Nd-YAG. Le taux de répétition du laser est inférieur à 100 Hz et en particulier égal à 30 Hz ; l'énergie par impulsions lumineuses est de 20 mJ et la largeur spectrale de 0,06 cm$^{-1}$. Ce laser à colorant émet dans le visible et dans l'ultraviolet à condition de l'équiper, de façon connue, d'un doubleur de fréquence.

La longueur d'onde des impulsions et leur largeur spectrale sont adaptées à celles des impulsions émises par fluorescence par l'élément chimique à doser. En particulier, la longueur d'onde du laser doit correspondre à une transition T atomique ou ionique autorisée par l'élément et la largeur spectrale des impulsions laser doit être inférieure à la largeur de la transition T considérée, en présence du plasma.

Les impulsions laser 20 sont envoyés vers le plasma HF 16, dans lequel est injecté l'échantillon 6 à analyser, à l'aide de deux prismes 22 et 24 à réflexion totale, en quartz sans traitement diélectrique. Ces prismes sont équipés chacun de leur système de réglage en rotation respectivement 26 et 28. Le prisme 22 et son système de réglage 26 est situé hors de l'enceinte de confinement 2, tandis que le prisme 24 et son système de réglage 28 sont situés à l'intérieur de l'enceinte.

L'introduction des impulsions lumineuses 30 réfléchies par le prisme externe 22 s'effectue via une fenêtre 32, en quartz sans traitement diélectrique montée sur l'enceinte de confinement 2. Les impulsions lumineuses 40 réfléchies par le prisme interne 24 excitent localement le plasma 16 contenant l'échantillon 6 à analyser. Ce dernier émet alors par fluorescence des impulsions lumineuses 34, caractéristiques de l'espèce chimique à doser.

La zone de plasma excitée par les impulsions laser porte la référence 36.

Un absorbeur 38, situé dans le prolongement des impulsions lumineuses 40, réfléchies par le prisme 24, permet d'absorber toute la lumière n'ayant pas réagi avec le plasma 16. Cet absorbeur 38 est situé en particulier à l'intérieur de l'enceinte 2.

Afin de ne pas perturber la détection des impulsions lumineuses 34 de fluorescence émises par l'espèce à doser, cette détection se fait dans une direction formant un angle A avec la direction des impulsions lumineuses 40, réfléchies par le prisme 24. Cet angle A est choisi dans l'intervalle 30 à 90°.

De même pour ne pas gêner les interventions humaines indispensables au fonctionnement du dispositif de dosage et en particulier de la torche à plasma 10-14, il est préférable d'envoyer les impulsions laser excitatrices dans l'enceinte 2 par une face de l'enceinte, non parallèle à celle devant laquelle travaillent les opérateurs. En particulier, les impulsions laser peuvent être introduites par la face supérieure de l'enceinte, comme représenté sur la figure 1.

Les impulsions de fluorescence 34 émises par l'espèce chimique à analyser sont détectées par un spectromètre d'émission 42, (du type ARL 3520) situé hors de l'enceinte, ayant une résolution de 0,05 nm. En regard de ce spectromètre d'émission 42, l'enceinte 2 est équipée d'une autre fenêtre 44 en quartz sans traitement diélectrique, assurant la sortie des impulsions de fluorescence 34.

Afin que la zone 36 du plasma excitée par les impulsions laser soit conjuguée optiquement avec la fente d'entrée du spectromètre 42, une lentille convergente 46 est prévue entre le spectromètre 42 et la fenêtre 44.

Pour assurer une bonne détection, l'ouverture de la fente d'entrée du spectromètre doit être suffisante pour observer l'ensemble de la zone 36 du plasma excitée.

Le spectromètre 42 est équipé, de façon connue, d'un sélecteur en longueur d'onde et d'un détecteur du type photomultiplicateur apte à transformer les impulsions de fluorescence sélectionnées en longueur d'onde en un signal électrique proportionnel à l'intensité d'une impulsion laser 20.

A cet effet, le photomultiplicateur du type référencé 928 S et commercialisé par la firme HAMAMATSU est équipé de trois capacités montées en parallèle sur les trois dernières dinodes afin de permettre un temps de réponse rapide du photomultiplicateur et de faire fonctionner le photomultiplicateur en impulsions.

Pour le dosage d'un élément particulier, le spectromètre 42 doit être réglé sur la longueur d'onde d'une transition T' de l'élément ayant le même niveau d'énergie supérieur que celui de la transition T excitatrice. Ce réglage s'effectue en deux temps:

- Lorsque la transition excitatrice T est choisie, on recherche dans l'atlas de raies de l'élément considéré une transition T' ayant le même niveau d'énergie supérieur que la transition T. On obtient ainsi une longueur d'onde

théorique $T_0$ de fluorescence.

- En utilisant l'émission lumineuse du plasma pour l'élément considéré, on recherche ensuite expérimentalement la longueur d'onde fournissant le meilleur signal pour la transition considérée. Pour cela, on effectue généralement un balayage en longueur d'onde au voisinage de la valeur théorique $T_0$.

Dans le cas de l'uranium l'excitation a lieu à 409,014 nm ce qui correspond à une transition ionique T entre les niveaux d'énergie situés à 1749 cm$^{-1}$ et 26191 cm$^{-1}$. La fluorescence est mesurée à 385,958 nm ce qui correspond à une transition entre les niveaux 26191 cm$^{-1}$ et 289 cm$^{-1}$.

Le signal électrique issu du spectromètre 42, représentant de façon univoque le signal de fluorescence émis par l'élément à doser, est amplifié puis filtré par un circuit électronique 48, situé hors de l'enceinte. Le filtre permet de ne laisser passer que le signal électrique ayant la même largeur que celle des impulsions laser.

Le dispositif d'amplification 48 est en particulier un amplificateur à gain en courant typiquement de 10$^6$ V/A, ayant une bande passante couvrant la gamme de 200 MHz-50 Hz correspondant à la durée des impulsions laser qui sont de l'ordre de 10 ns.

Les signaux électriques filtrés sont alors recueillis par un échantillonneur bloqueur 50 de type "boxcar" qui échantillonne les impulsions électriques issues du circuit 48 de façon synchrone avec les impulsions laser. A cet effet, le laser est équipé de façon connue, d'un synchronisateur pilotant l'échantillonneur. La durée de l'échantillonnage est typiquement de 10 ns comme la durée des impulsions excitatrices.

Cet échantillonneur bloqueur 50 reçoit une série de signaux impulsionnels provenant du spectromètre 42 pendant les 10ns et il convertit cette série d'impulsions électriques en des signaux continus proportionnels à l'intensité moyenne de cette série de signaux pulsés (cette série de signaux pulsés correspondant à un seul signal laser).

Le temps de réponse de l'ensemble des circuits électroniques (48 + 50) est de l'ordre de 50 ns.

La tension continue engendrée par l'échantillonneur bloqueur 50 peut ensuite être gardée en mémoire de manière analogique ou numérique et être moyennée avec la valeur de la tension continue suivante, correspondant à l'impulsion laser suivante.

Les signaux électriques ainsi traités peuvent être enregistrés sur un enregistreur par exemple du type table traçante puis envoyés dans un microordinateur 52 en vue de déterminer la quantité d'une espèce chimique contenue dans l'échantillon 6 à analyser.

Cette quantité est déterminée à partir d'une courbe d'étalonnage donnant l'intensité de fluorescence en fonction de la concentration connue de l'espèce chimique à doser, courbe mémorisée dans le microordinateur.

Le dispositif selon l'invention permet une analyse par fluorescence atomique ou ionique, induite dans un plasma par un laser impulsionnel, qui est une technique d'analyse puissante. Il permet le dosage de différents éléments contenus dans des solutions radioactives tels que le neptunium, le plutonium, l'américium, le curium, le techhnétium, le zirconium, l'uranium.

En particulier, le dispositif selon l'invention est particulièrement bien adapté au dosage du plutonium en présence de fortes concentrations d'autres éléments comme l'uranium et les produits de fission. Il apporte une amélioration considérable aux dispositifs connus d'analyse d'éléments radioactifs.

Ce dispositif a permis le dosage du plutonium, seul et en présence d'uranium, dans une solution nitrique 0,1 N. Il faut noter que le plutonium n'avait jusqu'à présent jamais été mis en évidence par fluorescence induite, étant donné la complexité de son spectre d'émission.

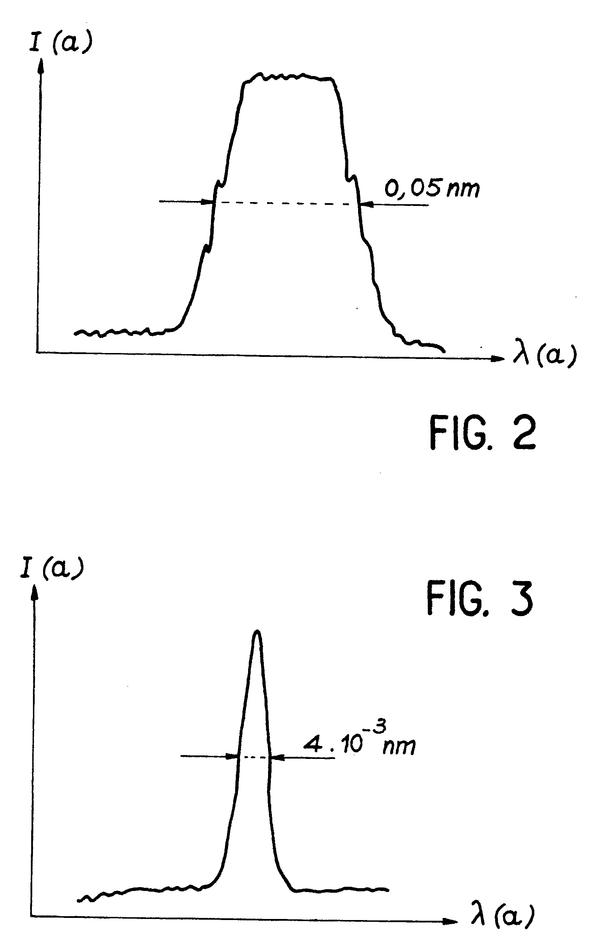

La figure 2 donne l'intensité de fluorescence $I_f$ du plutonium en fonction de la longueur d'onde d'excitation des impulsions laser. Ce spectre correspond à une excitation optiquement saturée. La longueur d'onde d'excitation est de l'ordre de 585 nm avec une largeur de bande à mi-hauteur de 0,05 nm. Ce profil a été obtenu par un balayage d'un laser à colorant à une vitesse de 0,1 nm/min. La longueur d'onde de fluorescence correspondante du plutonium est située dans l'ultraviolet.

De la même façon, comme représenté sur la figure 3, on a représenté l'intensité $I_f$ de fluorescence du plutonium en fonction d'une excitation lumineuse optiquement insaturée de 300nm avec une largeur de bande à mi-hauteur de $4.10^{-3}$ nm. Ce profil a été obtenu avec un balayage laser de 0,05 nm/min. Là encore, la fluorescence du plutonium était située dans l'ultraviolet. Par ailleurs, on a déterminé avec le dispositif de l'invention, la quantité d'uranium contenue dans un échantillon radioactif contenant aussi du plutonium. La longueur d'onde des impulsions laser était de 385,9 nm et la longueur d'onde d'émission par fluorescence de l'uranium était de 4.09,0 nm. De même, on a dosé du ziconium en présence d'uranium, la longueur d'onde excitatrice était de 310,6 nm et la longueur d'onde d'émission par fluorescence du zirconium était de 256,9 nm.

La description du dispositif selon l'invention donnée précédemment n'a bien entendu été donnée qu'à titre illustratif, toute modification sans pour autant sortir du cadre de l'invention pouvant être envisagée.

En particulier, il est possible de remplacer les prismes à réflexion totale non traités par des miroirs. Toutefois, compte tenu de l'agressivité chimique de l'atmosphère située à l'intérieur de l'enceinte 2 ainsi que l'agressivité des impulsions laser de forte puissance, il est préférable d'utiliser des prismes en quartz non traité. Il en est de même en ce qui concerne les fenêtres d'entrée et de sortie des impulsions lumineuses de l'enceinte. En outre, le quartz a l'avantage d'être transparent aux ultraviolets.

Par ailleurs, il est possible d'utiliser un laser autre qu'un laser à colorant, accordable en longueur d'onde. En particulier, lorsque l'on désire doser toujours le même élément contenu dans des solutions radioactives telles qu'on les trouve dans les usines de retraitement des combustibles irradiés, il est possible d'utiliser un laser pulsé fixe dont la longueur d'onde et la largeur spectrale sont parfaitement appropriées à l'excitation par fluorescence de cet élément chimique.

**Revendications**

1. Dispositif de dosage d'un élément contenu dans un échantillon liquide, comportant :
   - des moyens (10, 12, 14) pour former un plasma (16) haute fréquence et pour injecter dans le plasma (16)> ledit échantillon (6),
   - un laser (18) émettant des impulsions laser (20) dont la longueur d'onde et la largeur spectrale sont appropriées à la seule excitation dudit élément,
   - des composants optiques (22, 24) pour envoyer les impulsions laser dans le plasma (16) afin que l'échantillon (6) injecté dans le plasma (16) émette par fluorescence, selon une première direction, des impulsions lumineuse (34) caractéristiques dudit élément,
   - un système optique (46) pour former l'image de la zone excitée (36) par les impulsions laser sur un spectromètre (42) apte à sélectionner, puis transformer les impulsions (34) émises par l'élément en un signal électrique,
   - un système électronique (48, 50) pour traiter le signal électrique issu du spectre (42) de manière synchrone avec les impulsions laser,
   - des moyens (52) pour déterminer à partir du signal électrique traité la quantité dudit élément contenu dans l'échantillon (6),

   caractérisé en ce que le dispositif comprend en outre :
   - une enceinte de confinement (2) destinée à contenir l'échantillon (6) et ne comportant pas d'autre accès (4) que celui servant à introduire l'échantillon (6), cet accès (4) étant fermé lors du dosage, le laser (18), le spectromètre (42), le système électronique (48, 50) et les moyens de détermination (52) étant situés hors de l'enceinte et les moyens (10, 14) pour former le plasma et injecter l'échantillon dans ce dernier étant placés dans l'enceinte,
   - une première fenêtre (32) montée sur la face supérieure de l'enceinte (2) pour introduire les impulsions laser (30) dans l'enceinte sans qu'elles interagissent avec le plasma,
   - une seconde fenêtre (44) montée sur l'enceinte pour faire sortir de l'enceinte les impulsions (34) émises par l'élément, en direction du spectromètre,

   et en ce que les composants optiques sont constitués d'une première optique (22) située hors de l'enceinte pour diriger les impulsions laser (20) issues du laser sur la première fenêtre (32) selon une seconde direction (30) décalée par rapport à la première direction, et d'une seconde optique (28) située dans l'enceinte pour réfléchir, selon une troisième direction, les impulsions laser (30) entrant dans l'enceinte par la première fenêtre de façon qu'elles interagissent avec le plasma, la première et la troisième directions étant contenues dans un même plan perpendiculaire au plasma et formant dans ce plan un angle de 30 à 90°.

2. Dispositif de dosage selon la revendication 1, caractérisé en ce que le laser (18) est un laser accordable en longueur d'onde et que des moyens de balayage en longueur d'onde du spectromètre sont prévus.

3. Dispositif de dosage selon la revendication 1 ou 2, caractérisé en ce que la largeur spectrale des impulsions laser (20) est inférieure à la largeur de la transition responsable de la fluorescence.

4. Dispositif de dosage selon l'un quelconque des revendications 1 à 3, caractérisé en ce que la fenêtre (32) pour l'introduction dans l'enceinte (2) des impulsions laser est en quartz non traité.

5. Dispositif de dosage selon l'une quelconque des revendications 1 à 4, caractérisé en ce que la fenêtre (44) assurant la sortie des impulsions (34) émises par l'élément, hors de l'enceinte, est en quartz non traité.

6. Dispositif de dosage selon l'une quelconque des revendications 1 à 5, caractérisé en ce que la première et la seconde optiques (22, 24) servant à envoyer les impulsions laser dans le plasma sont des prismes en quartz non traité.

7. Dispositif de dosage selon l'une quelconque des revendications 1 à 6, caractérisé en ce que le spectromètre (42) comprend un système de détection pulsé.

8. Dispositif de dosage selon la revendication 7, caractérisé en ce qu'il comporte un échantillonneur-bloqueur (50) pour transformer une série de signaux pulsés électriques émis par le spectromètre (42) en des signaux continus proportionnels à l'intensité moyenne de ladite série.

9. Dispositif de dosage selon l'une quelconque des revendications 1 à 8, caractérisé en ce qu'il comprend un absorbeur (38) absorbant les impulsions laser n'ayant pas réagi avec le plasma (16).

10. Utilisation du dispositif selon l'une quelconque des revendications 1 à 9 pour le dosage d'un élément à spectre d'émission complexe.

11. Utilisation du dispositif selon l'une quelconque des revendications 1 à 9 pour le dosage d'un élément radioactif à spectre d'émission complexe.

**Claims**

1. Apparatus for dosing an element contained in a liquid sample, comprising means (10, 12, 14) for forming a high frequency plasma (16) and for injecting said sample (6) into the plasma (16), a laser (18) emitting laser pulses (20), whose wavelength and spectral width are appropriate for the sole excitation of said element, optical components (22, 24) for supplying laser pulses into the plasma (16), in order that the sample (6) injected into the plasma (16) emits by fluorescence, in a first direction light pulses (34) which are characteristic of said element, an optical system (46) for forming the image of the excited zone (36) by laser pulses on a spectrometer (42) able to select and then transform the pulses (34) emitted by the element into an electric signal, an electronic system (48, 50) located outside the enclosure for processing the electrical signal from the spectrometer (42) synchronously with the laser pulses and means (52) for determining on the basis of the processed electric signal the quantity of said element contained in the sample (6), characterized in that the apparatus also comprises a confinement enclosure (2) for containing the sample (6) and having no access (4) other than that used for introducing the sample (6), said access (4) being closed during dosing, the laser (18), the spectrometer (42), the electronic system (48, 50) and the determination means (52) being positioned outside the enclosure and the means (10, 14) for forming the plasma and injecting the sample into the latter being located within the enclosure, a first window (32) mounted on the upper face of the enclosure (2) for introducing the laser pulses (30) into the enclosure without their interacting with the plasma, a second window (44) mounted on the enclosure in order to pass out of the window the pulses (34) emitted by the element in the direction of the spectrometer and in that the optical components are constituted by a first optics (22) located outside the enclosure for directing the laser pulses (20) from the laser on to the first window (32) in a second direction (30) displaced with respect to the first direction and a second optics (28) located in the enclosure for reflecting in a third direction the laser pulses (30) entering the enclosure by the first window in such a way that they interact with the plasma, the first and third directions being contained in the same plane perpendicular to the plasma and forming in the said plane an angle of 30 to 90°.

2. Dosing apparatus according to claim 1, characterized in that the laser (18) is a wavelength-tunable laser and in that spectrometer wavelength scanning means are provided.

3. Dosing apparatus according to claims 1 or 2, characterized in that the spectral width of the laser pulses (20) is less than the transition width responsible for the fluorescence.

4. Dosing apparatus according to any one of the claims 1 to 3, characterized in that the window (32) for the introduction into the enclosure (2) of the laser pulses is made from untreated quartz.

5. Dosing apparatus according to any one of the claims 1 to 4, characterized in that the window (44) for the exit of the pulses (34) emitted by the element, located outside the enclosure, is made from untreated quartz.

6. Dosing apparatus according to any one of the claims 1 to 5, characterized in that the first and second optics (22, 24) used for delivering laser pulses into the plasma are untreated quartz prisms.

7. Dosing apparatus according to any one of the claims 1 to 6, characterized in that the spectrometer (42) comprises a pulsed detection system.

8. Dosing apparatus according to claim 7, characterized in that it comprises a sample and hold circuit (50) for converting a series of electric pulsed signals emitted by the spectrometer (42) into continuous signals proportional to the mean intensity of the said series.

9. Dosing apparatus according to any one of the claims 1 to 8, characterized in that it comprises an absorber (38) absorbing the laser pulses which have not reacted with the plasma (16).

10. Use of the apparatus according to any one of the claims 1 to 9 for dosing an element having a complex emission spectrum.

11. Use of the apparatus according to any one of the claims 1 to 9 for dosing a radioactive element having a complex emission spectrum.

**Ansprüche**

1. Vorrichtung zur quantitativen Analyse für ein in einer flüssigen Probe enthaltenes Element, bestehend aus:
   - Mitteln (10, 12, 14) zur Erzeugung eines Hochfrequenzplasmas (16) und zum Einspritzen der genannten Probe (6) in das Plasma (16),
   - einem Laser (18), der Laserimpulse (20) aussendet, deren Wellenlänge und spektrale Bandbreite geeignet sind, nur das genannte Element anzuregen,
   - optischen Bauteilen (22, 24) zur Leitung der Laserimpulse in das Plasma (16), damit die ins Plasma (16) eingespritzte Probe (6) durch Fluoreszenz in einer ersten Richtung für das genannte Element charakteristische Lichtimpulse (34) emittiert,
   - einem optischen System (46) zur Abbildung des durch die Laserimpulse angeregten Bereiches (36) auf ein Spektrometer (43), das in der Lage ist, die durch das Element emittierten Impulse (34) auszusondern und dann in ein elektrisches Signal zu verwandeln,
   - einem elektronischen System (48, 50) zur mit den Laserimpulsen synchronen Verarbeitung des aus dem Spektrum (42) gewonnenen elektrischen Signals,
   - Mitteln (52) zur Bestimmung der in der Probe (6) enthaltenen Menge des genannten Elementes aus dem verarbeiteten elektrischen Signal,
dadurch gekennzeichnet, daß die Vorrichtung außerdem enthält:
   - eine Sicherheitshülle (2) zur Aufnahme der Probe (6), die keinen anderen Zugang aufweist, als den zur Einführung der Probe (6) dienenden, wobei dieser Zugang (4) während der quantitativen Analyse geschlossen ist, wobei der Laser (18), das Spektrometer (42), das elektronische System (48, 50) und die Bestimmungsmittel (52) außerhalb der Hülle angeordnet sind und die Mittel (10, 14) zur Erzeugung des Plasmas und zum Einspritzen der Probe in dieses in der Hülle angeordnet sind,
   - ein erstes, in der oberen Seite der Hülle (2) angebrachtes Fenster (32) zur Einleitung der Laserimpulse (30) in die Hülle, ohne daß sie mit dem Plasma in Wechselwirkung treten,
   - ein zweites, in der Hülle angebrachtes Fenster (44) zum Herauslassen der vom Element emittierten Impulse (34) aus der Hülle in Richtung des Spektrometers,
und dadurch, daß die optischen Bauteile aus einer ersten, außerhalb der Hülle angeordneten Optik (22) zur Leitung der Laserimpulse (20) aus dem Laser auf das erste Fenster (32) in einer zweiten, gegenüber der ersten Richtung verschobenen Richtung (30) bestehen und aus einer zweiten in der Hülle angeordneten Optik (28) zur Reflexion der durch das erste Fenster in die Hülle eintretenden Laserimpulse (30) in einer dritten Richtung derart, daß sie mit dem Plasma in Wechselwirkung treten, wobei die erste und die dritte Richtung in derselben, zum Plasma senkrechten Ebene liegen und in dieser Ebene einen Winkel zwischen 30 und 90$^{\circ}$ einschließen.

2. Vorrichtung zur quantitativen Analyse gemäß Patentanspruch I, dadurch gekennzeichnet, daß der Laser (18) ein bezüglich der Wellenlänge abstimmbarer Laser ist und daß beim Spektrometer Mittel zur Abtastung der Wellenlängen vorgesehen sind.

3. Vorrichtung gemäß irgendeinem der Patentansprüche 1 oder 2, dadurch gekennzeichnet, daß die spektrale Bandbreite der Laserimpulse (20) kleiner ist, als die Bandbreite des für die Fluoreszenz verantwortlichen Überganges.

4. Vorrichtung gemäß irgendeinem der Patentansprüche 1 bis 3, dadurch gekennzeichnet, daß das Fenster (32) zum Einleiten der Laserimpulse in die Hülle aus unbehandeltem Quarz besteht.

5. Vorrichtung gemäß irgendeinem der Patentansprüche 1 bis 4, dadurch gekennzeichnet, daß das zum Herauslassen der vom Element emittierten Impulse (34) aus der Hülle dienende Fenster (44) aus unbehandeltem Quarz besteht.

6. Vorrichtung gemäß irgendeinem der Patentansprüche 1 bis 5, dadurch gekennzeichnet, daß die erste und zweite, zur Einleitung der Laserimpulse ins Plasma dienende Optik (22, 24) Prismen aus unbehandeltem Quarz sind.

7. Vorrichtung gemäß irgendeinem der Patentansprüche 1 bis 6, dadurch gekennzeichnet, daß das Spektrometer (42) ein gepulstes Nachweissystem enthält.

8. Vorrichtung gemäß Patentanspruch 7, dadurch gekennzeichnet, daß sie einen Sampler-Sperrer (50) zur Umwandlung einer Serie gepulster elektrischer, vom Spektrometer (42) ausgesandter Signale in kontinuierliche, der mittleren Intensität der genannten Serie proportionale Signale enthält.

9. Vorrichtung gemäß irgendeinem der Patentansprüche 1 bis 8, dadurch gekennzeichnet, daß sie einen, die nicht mit dem Plasma (16) reagiert habenden Laserimpulse absorbierenden Absorber (38) enthält.

10. Anwendung der Vorrichtung gemäß irgendeinem der Patentansprüche I bis 9 zur quantitativen Analyse eines Elementes mit komplexem Emissionsspektrum.

11. Anwendung der Vorrichtung gemäß irgendeinem der Patentansprüche 1 bis 9 zur quantitativen Analyse eines radioaktiven Elementes mit komplexem Emissionsspektrum.

FIG. 1

FIG. 2

FIG. 3